# EUROPÄISCHE PATENTANMELDUNG

(11) **EP 2 502 964 A1**
(43) Veröffentlichungstag der Anmeldung: **26.09.2012**
(21) Anmeldenummer: 11159599.7
(22) Anmeldetag: 24.03.2011
(51) Int. Cl.: C08L 89/06

(54) **Verfahren zur Herstellung von Kollagen**

(71) Anmelder: Molda AG, 21368 Dahlenburg (DE)
(72) Erfinder: Staudenmaier, Hans, 21401 Thomasburg (DE)
(74) Vertreter: Lange, Sven

(57) **Zusammenfassung**

Die Erfindung betrifft ein Verfahren zur Herstellung von Kollagen aus einem Kollagen umfassenden Ausgangsmaterial sowie das Kollagen, welches mit dem Verfahren hergestellt wurde, sowie die Verwendung des gewonnenen Kollagens in verschiedenen Bereichen der Nahrungsmittelwirtschaft, der Grundlagenforschung oder aber in anderen Bereichen.

## Beschreibung

Die Erfindung betrifft ein Verfahren zur Herstellung von Kollagen aus einem Kollagen umfassenden Ausgangsmaterial sowie das Kollagen, welches mit dem Verfahren hergestellt wurde, sowie die Verwendung des gewonnenen Kollagens in verschiedenen Bereichen der Nahrungsmittelindustrie, der Grundlagenforschung oder aber in anderen Bereichen.

Im Stand der Technik sind verschiedene Verfahren zur Kollagenherstellung bekannt. So beschreiben z. B. die DE 10 2008 013 091, DE 100 60 643, die EP 0 999 247, die EP 0 871 763, die DE 195 41 555, die EP 0 578 661, die EP 0 463 266 sowie die EP 0 421 450 verschiedene Verfahren zur Herstellung von Kollagen.

Derartige Verfahren haben den Nachteil, dass sie auf ein ganz konkretes Kollagenhaltiges oder Kollagen umfassendes Ausgangsmaterial beschränkt sind, wie z. B. auf Kollagen-haltige marine Schwämme. Die Verfahren des Standes der Technik sind weiterhin störanfällig und erlauben keine Bereitstellung von Kollagen in gleichbleibender Qualität.

Aufgabe der Erfindung war es daher, ein Verfahren sowie eine Vorrichtung zur Herstellung von Kollagen bereitzustellen, welches die Nachteile des Standes der Technik nicht aufweist.

Gelöst wird die Aufgabe durch ein Verfahren zur Herstellung von Kollagen aus einem Kollagen umfassenden Ausgangsmaterial, welches die folgenden Schritte umfasst:
a) Bereitstellung des Kollagen umfassenden Materials,
b) ggf. Zerkleinern, bevorzugt auf eine Größe im Längen- und/oder Breitenparameterbereich von 0,5 cm bis 15 cm,
c) Zugabe eines Oxidationsmittels,
d) Zugabe einer Säure oder Base,
e) ggf. Dekantieren,
f) Trocknung.

Vorteilhafte Weiterbildungen des Verfahrens sind in den Unteransprüchen angegeben.

Es war völlig überraschend, dass das Verfahren eingesetzt werden kann, um aus verschiedenen Ausgangsmaterialen Kollagen von hoher Qualität herzustellen. Das erfindungsgemäße Verfahren ist einfach und kann mit geringem Aufwand an Energie, Zeit und Wartung realisiert werden.

In einer bevorzugten Ausführungsform der Erfindung ist das Kollagen enthaltende oder das Kollagen umfassende Ausgangsmaterial beispielsweise ein Material, welches Haut, Knochen, Zähne, Knorpel, Sehnen, Bänder und/oder andere Schlachtnebenprodukte und/oder Bindegewebe umfasst. Es war völlig überraschend, dass diese Vielzahl von unterschiedlichen Kollagen umfassenden Ausgangsmaterialien mit Hilfe des erfindungsgemäßen Verfahrens in Kollagen umgewandelt werden kann.

Bei der Haut im Sinne der Erfindung handelt es sich um alle biologischen Gewebe, die bei einem Organismus der Abgrenzung von innen und außen dienen können. Haut im Sinne der Erfindung umfasst auch Gewebe oder organische Materialien, die Haare aufweisen bzw. eine Hornschicht oder aber auch Schweißdrüsen.

Knochen sind im Sinne der Erfindung insbesondere Teile des skelettbildenden Stützgewebes der Wirbeltiere. Es kann sich beispielsweise um Röhrenknochen, platte Knochen, kurze Knochen, Sesambeine, luftgefüllte Knochen oder aber auch um unregelmäßige Knochen wie beispielsweise Unterkieferknochen handeln.

Bei den genannten Zähnen handelt es sich insbesondere um Hartgebilde aus der Mundhöhle von Wirbeltieren. Beispielsweise kann es sich um Milchzähne, Schneidezähne, Eckzähne, Vormahlzähne und/oder Mahlzähne handeln, die insbesondere von landwirtschaftlichen Nutztieren stammen.

Weiterhin kann mit dem erfindungsgemäßen Verfahren auch aus dem Ausgangsmaterial Sehnen Kollagen gewonnen werden. Sehnen sind im Sinne der Erfindung insbesondere die Teile eines Muskels, durch den der Muskel mit mindestens einem Knochen oder mit einem anderen Muskel verbunden ist. Sehnen im Sinne der Erfindung sind vor allem Binde- und/oder Stützgewebe aus fixen Zellen und einer Interzellularsubstanz, in die hauptsächliche kollagene Fasern eingelagert sind.

Neben Sehnen als Kollagen umfassendem Ausgangsmaterial können auch Bänder oder Ligamente eingesetzt werden. Diese können beispielsweise aus landwirtschaftlichen Nutztieren oder beispielsweise aus Muscheln stammen. Bänder im Sinne der Erfindung sind insbesondere strangartige Strukturen, die Knochen mit weiteren Knochen verbinden.

Ganz allgemein können im Sinne der Erfindung aber auch Bindegewebe als Ausgangsmaterial verwendet werden. Hierunter versteht man Gewebetypen, denen vor allem gemeinsam ist, dass sie reich an Zwischenzellmasse sind. Hierbei kann es sich beispielsweise um Fettgewebe, straffes Bindegewebe, gallertiges Bindegewebe, retikuläres Bindegewebe, spinozelluläres Bindegewebe, Stützgewebe, aber im weiteren Sinne auch um die bereits genannten Knorpel- und Knochengewebe handeln.

Eines der bevorzugten Ausgangsmaterialen kann im Sinne der Erfindung unter dem Begriff der Schlachtnebenprodukte zusammengefasst werden. Dem durchschnittlichen Fachmann ist bekannt, welche Materialien zu den Schlachtnebenprodukten gehören. Hierbei handelt es sich um Material, welches beispielsweise bei der Tierkörperverwertung oder aber bei der Tierkörperbeseitigung entstehen kann. Es kann sich beispielsweise a) um Tiernebenprodukte handeln, b) um nicht mehr für den humanen Verzehr geeignete Lebensmittel tierischer Herkunft, aber auch c) um tote bzw. totgeborene Groß- und/oder Haustiere bzw. Teile hiervon oder aber d) um alle Produkte, die während des Schlachtens anfallen können, wie z. B. Schlachtkörperteile, Fischabfälle, Haarpelze, Hörner, insbesondere von klinisch unauffälligen Tieren, tierische Abfälle aus der Lebensmittelindustrie, minderwertiges Fleisch und Häute oder anderes.

Besonders bevorzugt kann es sich bei der Haut um Oberhaut- oder Unterhautgewebe handeln. Beispielsweise würde bei der Haut von Schweinen insbesondere die Oberhaut zu Kollagen verarbeitet werden und beispielsweise bei Rindern insbesondere die Unterhaut. Besonders bevorzugte Ausgangsmaterialien sind daher beispielsweise Rinderspalt und/oder Schweineschwarten. Das Ausgangsmaterial kann aber selbstverständlich nicht nur von landwirtschaftlichen Nutztieren wie Rindern, Kälbern, Schafen, Ziegen und/oder Haus- und Wildschweinen stammen, sondern auch von Vögeln und/oder Fischen. Bei den landwirtschaftlichen Nutztieren kann es sich im Sinne der Erfindung um Mast- und/oder Schlachttiere, Milchtiere, Fett-, Leder-, Daunen- oder Felllieferanten, Zuchttiere und/oder Arbeitstiere handeln, die im Bereich der Nahrungsgewinnung oder der Gewinnung von Kleidung oder bestimmter tierischer Rohstoffe oder aber im Bereich der Arbeitserleichterung eine besondere Bedeutung haben. Derartige Nutztieren sind im Sinne der Erfindung aber auch außerhalb der Landwirtschaft genutzte Tiere aus dem Bereich der Jagdtiere, Wachtiere, Transporttiere oder aber Labor- und/oder Versuchstiere. Selbstverständlich gehören zu den genannten Nutztieren auch sogenannte gezähmte Wildfänge und nicht domestizierte Tiere, wie z. B. Fische. Im Sinne der Erfindung werden aber auch Zirkus- und/oder Zootiere, sowie Heimtiere als landwirtschaftliche Nutztiere erfasst. Zu den bevorzugten Säugetieren im Sinne der Erfindung gehören neben den genannten Rindern, Schweinen, Schafen und Ziegen auch Pferde sowie Wildbret, Gürteltiere, Chinchillas, Nerze, Zobel, Nutrias, Waschbären, Bestandteile von Walen, Esel, Büffel, Rentiere, Kamele, Hunde, Kaninchen, Meerschweinchen, Katzen, Goldhamster und zahlreiche andere. Zu den besonders bevorzugten Vögeln gehören beispielsweise Hühner, Puten, Gänse, Straußen und andere. Besonders bevorzugte Fische sind beispielsweise Seelachs, Forelle, Hering, Kabeljau, Zuchtlachs oder andere.

In einer weiteren besonders bevorzugten Ausführungsform wird das Kollagen umfassende Ausgangsmaterial durch Kühlung, Trocknung, Anhebung des pH-Wertes oder aber mit Kalziumhydroxit und/oder Kalziumoxid stabilisiert. Stabilisiert bedeutet im Sinne der Erfindung, dass der Verderb verhindert wird, indem das Wachstum von Mikroorganismen, bevorzugt Bakterien verlangsamt oder verhindert wird bzw. dadurch, dass die Mikroorganismen, bevorzugt die Bakterien abgetötet werden. Besonders bevorzugt ist eine Stabilisierung des Kollagen enthaltenden Ausgangsmaterials durch Trocknung oder aber durch Kalk.

In einer weiteren bevorzugten Ausführungsform der Erfindung ist das Oxidationsmittel ausgewählt aus der Gruppe umfassend Wasserstoffperoxid, Ozon, Peroxyessigsäure, Natriumhypochlorid, Kaluimhydrochlorid und/oder ein Bleichmittel auf Sauerstoff-oder Chlorbasis. Ein Oxidationsmittel ist im Sinne der Erfindung jeder Stoff, der andere Stoffe oder Gewebe oxidieren kann und dabei selbst reduziert wird. Im engeren Sinne ist ein Oxidationsmittel eine Substanz, die Sauerstoff abgeben kann bzw. überträgt. Ein besonders bevorzugtes Oxidationsmittel ist Wasserstoffperoxid, da dieses vorteilhafterweise mit Wasser gut gemischt und somit innerhalb des Verfahrens sehr gut eingesetzt werden kann. Das Oxidationsmittel wird auf die bevorzugt zerkleinerten Ausgangsmaterialien aufgebracht. Durch das Oxidationsmittel wird das Ausgangsmaterial zusätzlich entkeimt und bevorzugt gebleicht. Des weiteren wird durch die Oxidationsmittel verhindert, dass weitere chemische Substanzen, die beispielsweise zur Enthaarung der Hautbestandteile eingesetzt wurden, im Verlauf des Verfahrens zur Bildung von unerwünschten Verbindungen wie z. B. Schwefelwasserstoff führen können.

In einer weiteren bevorzugten Ausführungsform wird als die zugesetzte Säure eine anorganische oder organische Säure ausgewählt, bevorzugt Essigsäure, Milchsäure, Zitronensäure, Weinsäure, Bernsteinsäure, Ameisensäure, Propionsäure, Phosphorsäure, Salzsäure, Salpetersäure und/oder Schwefelsäure. Alternativ kann, je nach Ausgangsmaterial, auch die Verwendung einer Base bzw. einer Lauge vorteilhaft sein. Bevorzugt kann die Säure eingesetzt werden, um den pH-Wert so zu senken, dass in dem Verfahrensablauf der isoelektrische Punkt des Kollagens eingestellt wird. Hierdurch wird erreicht, dass das zu gewinnende Kollagen nicht in Lösung übergeht. Besonders bevorzugt ist hier die Verwendung von Ameisensäure oder Essigsäure.

In einer weiteren bevorzugten Ausführungsform wird die Trocknung des gewonnenen Kollagens aus dem Kollagen umfassenden Ausgangsmaterial als Walzentrocknung durchgeführt. Mithilfe der Walzentrocknung können Lösungen, Suspensionen oder pastöse Massen innerhalb eines Verfahrens getrocknet werden. Bei der Walzentrocknung wird das zu trocknende Gut in einer dünnen Filmschicht auf einer rotierenden Walze aufgetragen, die beispielsweise von innen mit Dampf beheizt werden kann. Die eigentliche Trocknung erfolgt dann über die Kontakttrocknung, so dass das getrocknete Gut als Film oder in Form von Flocken über ein Messer von der Walze abgeschabt werden kann. Bevorzugt erfolgt die Walzentrocknung mit einer Einzelwalze, wobei die Beschickung dieser über mehrere Sümpfe möglich ist, bei der Auftragswalzen das entsprechende Material auf die Trocknungswalze aufbringen.

In einer weiteren bevorzugten Ausführungsform der Erfindung wird das zerkleinerte, mit einem Oxidationsmittel, bevorzugt Wasserstoffperoxid und/oder mit der Säure bzw. der Base versetzte Kollagen umfassende Ausgangsmaterial dekantiert, zentrifugiert und/oder mit einer Filterpresse, Nutsche und/oder mit einer Vakuumfiltration behandelt. Dekantieren im Sinne der Erfindung bezeichnet einen Prozess, bei dem ein ungelöster Feststoff aus einer Flüssigkeit, beispielsweise aus einer Suspension abgetrennt wird. Bei dem ungelösten Feststoff bzw. bei der Festphase handelt es sich um Kollagenbestandteile, die im weiteren Verfahren weiter aufgereinigt bzw. isoliert werden. Dem Fachmann ist bekannt, dass er die Abtrennung von Flüssig- und Festphase bzw. die Abtrennung von ungelösten Feststoffen aus einer Suspension mit verschiedenen Verfahren erfolgen kann. Besonders vorteilhafte Verfahren sind beispielsweise die Zentrifugation oder die Behandlung der Kollagen umfassenden Suspension mit einer Filterpresse. Bei der Zentrifugation erfolgt die Auftrennung der Flüssig- und Festphase der Suspension unter Ausnutzung der Massenträgheit der verschiedenen, in den Ausgangsmaterialien befindlichen Bestandteile. Bei der Behandlung mit einer Filterpresse werden ebenfalls Flüssig- und Festphase voneinander getrennt. Weitere bevorzugte Verfahren sind Verfahren zur mechanischen Trennung der Suspension mittels einer Nutsche, bei welcher die Suspension mithilfe eines Unterdrucks in Flüssig-und Festphase getrennt wird. Eine bekannte Vorrichtung hierfür ist beispielsweise der Büchner-Trichter. Bei all den genannten Trennverfahren werden unterschiedliche physikalische und/oder chemische Eigenschaften der Kollagenbestandteile und der Flüssigphase ausgenutzt, um diese voneinander zu trennen oder aber anzureichern.

Es ist besonders bevorzugt, wenn während des Verfahrens das Kollagen enthaltende oder umfassende Material mehrfach zerkleinert wird. Beim Zerkleinern werden Verfahren eingesetzt, bei denen die Partikelgrößenverteilung in einen feineren Größenbereich verschoben wird. Dem Fachmann sind verschiedene Vorrichtungen zum Zerkleinern bekannt. Kolloidmühlen zerteilen Partikel beispielsweise in eine Größe von < 2 mm, bevorzugt in den Nano- oder Mikrometerbereich.

Besonders bevorzugt ist es, wenn während des Zerkleinerns, beispielsweise mit einer Kolloidmühle, ein Oxidationsmittel und ggf. Wasser zu dem System hinzugegeben werden. Bei dem Oxidationsmittel kann es sich besonders bevorzugt um Wasserstoffperoxid handeln. Es war völlig überraschend, dass das Zerkleinern in einer Kolloidmühle in Gegenwart von Wasser und Wasserstoffperoxid zu einem besonders vorteilhaften Endprodukt des Verfahrens führt.

Das Verfahren kann in unterschiedlichen bevorzugten Ausführungsformen kontinuierlich und/oder diskontinuierlich durchgeführt werden. Ein kontinuierliches Verfahren gestattet es, innerhalb kurzer Zeit einen möglichst großen Materialumsatz zu realisieren. Bei dem diskontinuierlichen Verfahren (beispielsweise bei einem Batch-Verfahren) können einzelne Parameter, wie beispielsweise der isoelektrische Punkt, besonders sicher und genau eingestellt werden. Bei diskontinuierlichen bzw. Batch-Verfahren werden einzelne Schritte des erfindungsgemäßen Verfahrens so organisiert, dass sie jeweils separat aufeinander folgen. Bei Batch-Verfahren wird eine Suspensionsmenge als Ganzes einem Tank oder einem anderen Verfahrensgefäß wie einem Mischer oder ähnlichem zugeführt und nach Abschluss des Verfahrensschrittes wieder entnommen.

In einer besonders bevorzugten Ausführungsform der Erfindung ist vorgesehen, dass die Zugabe der Säure oder der Base so lange erfolgt, bis der isoelektrische Punkt des Kollagens erreicht ist, so dass es ungelöst vorliegt. Die Zugabe der Säure oder der Base kann beispielsweise in einem diskontinuierlichen Verfahrensablauf, bevorzugt in einem Batch-Verfahren erfolgen. Hierbei kann es beispielsweise bevorzugt sein, dass das zerkleinerte und mit Wasserstoffperoxid und Wasser in Kontakt gebrachte Material in mehr als einen Tank überführt wird, um in diesen den isoelektrischen Punkt des Kollagens genau einzustellen, damit das Kollagen nicht in Lösung geht. Die entsprechenden Tanks können beispielsweise als Rührwerktanks ausgebildet sein.

In einer bevorzugten Ausführungsform werden zwei Tanks verwendet, in denen diskontinuierlich der isoelektrische Punkt des Kollagens eingestellt wird, so dass während der folgenden Verfahrensschritte ausreichend Material zur Verfügung steht, welches beispielsweise kontinuierlich in einen Dekanter und anschließend in einen Walzentrockner überführt werden kann. Durch eine derartige Ausgestaltung des Verfahrens werden die Vorteile von diskontinuierlichen und kontinuierlichen Verfahrensabläufen miteinander kombiniert. Am isoelektrischen Punkt ist das Kollagen am unlöslichsten. In den bevorzugt zwei Tanks innerhalb des diskontinuierlichen Bereich des Verfahrens wird die Suspension so lange aufbewahrt, bis die gesamte Suspension den gewünschten pH-Wert und somit den entsprechenden isoelektrischen Punkt des Kollagens erreicht hat. Besonders bevorzugt findet das gesamte diskontinuierliche Verfahren wie auch die Einstellung des isoelektrischen Punktes bei Raumtemperatur statt, bevorzugt unterhalb von 40°C (insbesondere bei Ausgangsmaterial aus Schweinen und/oder Geflügel), besonders bevorzugt unterhalb von 30°C, ganz besonders bevorzugt unter 25°C und insbesondere unterhalb von 20°C.

Insbesondere die Bereitstellung von Kollagen aus organischen Bestandteilen vom Rind, insbesondere aus Bestandteilen der Haut, bereitet zahlreiche Schwierigkeiten. Das erfindungsgemäße Verfahren lässt sich anders als Verfahren des Standes der Technik sehr gut umsetzen, wenn als Ausgangsmaterial Rinderspalt eingesetzt wird. Ein besonders bevorzugtes Verfahren umfasst demgemäß folgende Schritte:
a) Bereistellen von Rinderspalt,
b) Zerkleinern des Rinderspalts, so dass handtellergroße Stücke erhalten werden,
c) weiteres Zerkleinern, so dass Stücke erhalten werden mit einer Längen-und/oder Breitendimensionierung von 0,5 bis 1,5 cm,
d) weiteres Zerkleinern mithilfe einer Kolloidmühle, so dass Stücke mit einer Längen- und/oder Breitenausdehnung von < 5 mm, bevorzugt < 3 mm, besonders bevorzugt < 2 mm erhalten werden, wobei in die Kolloidmühle ein Gemisch aus Wasserstoffperoxid und Wasser eingebracht wird,
e) Überführung der so gewonnenen Suspension in mindestens einen Tank, in welchen so lange Essigsäure eingefügt wird, bis der isoelektrische Punkt des Kollagens, bevorzugt bei einem pH-Wert von 4 bis 5,7 eingestellt ist,
f) Überführen der Suspension aus dem mindestens einen Tank in einen Dekanter,
g) Überführen der Festphase aus dem Dekanter in eine weitere Kolloidmühle, so dass Partikel mit einer Länden- und/oder Breitendimensionierung von 1 bis 2 mm erhalten werden, bevorzugt bei gleichzeitiger Dosierung von Wasser,
h) Überführen des so zerkleinerten Materials in einen Puffertank, in dem erneut der pH-Wert eingestellt werden kann.

In einer weiteren bevorzugten Ausführungsform der Erfindung ist vorgesehen, dass die Suspension aus mindestens einem Puffertank in einen zweiten Dekanter überführt wird, von dem aus die dort gewonnene Festphase in eine Vorwärmeinheit und anschließend auf den Walzentrockner aufgebracht wird.

Besonders bevorzugt ist es, wenn der Walzentrockner mit einem lonengebläse kombiniert ist, wobei das lonengebläse so ausgerichtet ist, dass das zu trocknende Material von dem lonengebläse beblasen und anschließend einer Vermahlung zugeführt werden kann. Es war völlig überraschend, dass die Anwesenheit eines lonengebläses dazu führt, dass das zu trocknende Material sehr gut aus dem Bereich des Walzentrockners abgeführt bzw. gewonnen werden kann, um es der weiteren Verarbeitung zuzuführen. Durch die Verwendung eines lonengebläses wird die elektrisch-statische Aufladung von Kollagen bzw. von anderen Bestandteilen vermieden. Dem Fachmann sind verschiedene lonengebläse oder andere technische Vorrichtungen zur Vermeidung der elektrostatischen Aufladung bekannt.

In weiteren bevorzugten Ausführungsformen der Erfindung ist vorgesehen, dass während des Verfahrens Metalldetektoren eingesetzt werden. Bevorzugt kann ein erster Metalldetektor bzw. ein Metallsuchgerät eingesetzt werden, wenn das Ausgangsmaterial einer ersten Zerkleinerung zugeführt wurde.

In einer weiteren bevorzugten Ausführungsform der Erfindung ist vorgesehen, dass die aus dem Dekanter gewonnene Flüssigkeit dem Verfahren wieder zugeführt wird, bevorzugt der Kolloidmühle. Hierdurch wird vorteilhafterweise der Wasserverbrauch des gesamten Verfahrens reduziert.

Das Verfahren kann bevorzugt so ausgeführt werden, dass die ersten Verfahrensschritte bis zur Einbringung des Materials in die bevorzugt zwei Tanks diskontinuierlich durchgeführt wird, um es anschließend kontinuierlich fortzuführen. Hierbei würde aus jeweils einem der beiden Tanks, in welchen der isoelektrische Punkt eingestellt wird, Material in einen Dekanter gepumpt werden, aus welchem die Festphase in eine Mühle, bevorzugt eine Kolloidmühle überführt wird. In dieser kann das Verhältnis Festphase zu Flüssigphase wiederum genauso eingestellt werden, wie es vorher war. Hierdurch wird überraschenderweise eine besonders gute Verarbeitung des Mahlgutes - d. h. des Kollagens - erreicht. Das Material aus der Kolloidmühle wird wiederum in einen Puffertank überführt, in welchen ggf. Essigsäure zum Einstellen des isoelektrischen Punkts eingeführt wird. Das aus dem Puffertank gewonnene Material kann in einen weiteren Dekanter überführt werden, aus welchem über eine Vorwärmeinheit Kollagen auf einen Walzentrockner überführt wird, welches nach der Trocknung vermahlen wird. Statt des Dekanters können selbstverständlich auch Filterpressen oder Zentrifugen eingesetzt werden, um die Festphase von der Flüssigphase abzutrennen.

In einer bevorzugten Ausführungsform des Verfahrens könnte die enzymfreie Aufreinigung von Kollagen in den einzelnen Prozessschritten oder in zusammengefassten Prozessschrittfolgen wie folgt realisiert werden:
a) Bereitstellung der Rohware,
b) Zerkleinerung,
c) pH-Wert-Einstellung,
d) Dekantieren,
e) Metalldetektion,
f) Walzentrocknung,
g) Vermahlung/Absiebung.

Detailliert wäre folgende Prozessschrittabfolge vorteilhaft:
- Bereitstellung der Rohware auf einem Band, auf welchem eine Metalldetektion durchgeführt wird und anschließend eine Zerschredderung und Vorzerkleinerung in handgroße Stückchen erfolgt.
- Das so zerkleinerte Material wird einer ersten Mühle zugeführt, in welcher das Material mit Wasserstoffperoxid und Wasser in Kontakt gebracht wird und hierbei auf eine Partikelgröße von < 1 cm zerkleinert wird.
- Das derart zerkleinerte Material wird in zwei Tanks überführt, in welche durch Essigsäurezugabe ein pH-Wert dergestalt eingestellt wird, dass der isoelektrische Punkt des Kollagens erreicht wird.
- Aus den Tanks wird das Material in eine Pumpe und in einen ersten Dekanter überführt.
- Die Flüssigphase aus dem Dekanter wird verworfen und die Festphase in eine zweite Mühle überführt, in die Frischwasser zugegeben wird und das Material auf eine Partikelgröße von < 2 mm zerkleinert wird.
- Das so zerkleinerte Material wird in einen weiteren Tank überführt, aus dem wiederum mit einer Pumpe die Suspension in einen zweiten Dekanter eingebracht wird.
- Die Flüssigphase aus diesem zweiten Dekanter wird in die erste Mühle überführt.
- Die Festphase wird einer Metalldetektion unterzogen und anschließend für den Walzenauftrag auf einen Walzentrocker vorbereitet.
- Das auf dem Walzentrockner getrocknete Kollagen wird mit einem lonengebläse und gefilterter Raumluft in Kontakt gebracht und anschließend vermahlen.

Die Erfindung betrifft auch das Kollagen, welches mit dem erfindungsgemäßen Verfahren bereitgestellt wird. Es zeichnet sich gegenüber dem Stand der Technik durch vorteilhafte Eigenschaften aus.

Das erfindungsgemäße Produkt zeichnet sich durch eine überraschend gute Wasserbindung und eine überraschend sehr gute Gelbildung aus. Während Produkte des Standes der Technik Bloomwerte im Bereich von <250 aufweisen, und selbst sauer aufgeschlossene Gelatine nur einen Bloomwert von 300 erreicht, hat das anmeldungsgemäße Kollagen einen Bloomwert von über 400 bis zu 600. Das anmeldungsgemäße Verfahren führt daher zu einem Produkt mit überraschend verbesserten Eigenschaften. Das anmeldungsgemäße Verfahren verfügt, neben diesen sich im Verfahrensprodukt niederschlagenden Vorteilen, noch über weitere überraschende Vorteile, wie die hohe Prozesssicherheit mit konstanten Qualitäten. Des weiteren kann das Verfahren mit einer großen Vielfalt an Rohwaren durchgeführt werden. Es ist weiterhin überraschend wassersparend, schonend und als Prozessverfahren sehr schlank ausgestaltet.

## Patentansprüche

1. Verfahren zur Herstellung von Kollagen aus einem Kollagen umfassenden Ausgangsmaterial,
**dadurch gekennzeichnet, dass**
das Verfahren die folgenden Schritte umfasst:
a) Bereitstellung des Kollagen umfassenden Materials,
b) ggf. Zerkleinern, bevorzugt auf eine Größe im Längen- und/oder Breitenparameterbereich von 0,5 cm bis 15 cm,
c) Zugabe eines Oxidationsmittels,
d) Zugabe einer Säure oder Base,
e) Dekantieren,
f) Trocknung.

2. Verfahren nach Anspruch 1,
**dadurch gekennzeichnet, dass**
das Kollagen umfassende Ausgangsmaterial ausgewählt ist aus der Gruppe umfassend Haut, Bindegewebe, Knochen, Zähne, Knorpel, Sehnen, Bänder und/oder andere Schlachtnebenprodukte.

3. Verfahren nach dem vorhergehenden Anspruch,
**dadurch gekennzeichnet, dass**
das Kollagen umfassende Ausgangsmaterial von Säugetieren, Vögeln oder Fischen stammt.

4. Verfahren nach Anspruch 1 bis 3,
**dadurch gekennzeichnet, dass**
das Kollagen umfassende Ausgangsmaterial durch Kühlung, Trocknung oder Anhebung des pH-Wertes mit Kalziumhydroxid und/oder Kalziumoxid behandelt wurde.

5. Verfahren nach einem der vorhergehenden Ansprüche,
**dadurch gekennzeichnet, dass**
das Oxidationsmittel ausgewählt ist aus der Gruppe umfassend Wasserstoffperoxid, Ozon, Peroxyessigsäure, Natriumhypochlorid, Kaluimhydrochlorid und/oder ein Bleichmittel auf Sauerstoff- oder Chlorbasis und/oder
die Säure eine anorganische oder organische Säure ist, bevorzugt Essigsäure, Milchsäure, Zitronensäure, Weinsäure, Bernsteinsäure, Ameisensäure, Propionsäure, Phosphorsäure, Salzsäure, Salpetersäure und/oder Schwefelsäure.

6. Verfahren nach einem der vorhergehenden Ansprüche,
**dadurch gekennzeichnet, dass**
die Trocknung als Walzentrocknung durchgeführt wird.

7. Verfahren nach einem der vorhergehenden Ansprüche,
**dadurch gekennzeichnet, dass**
das zerkleinerte, mit Wasserstoffperoxid und/oder mit der Säure versetzte Kollagen umfassende Ausgangsmaterial dekantiert, zentrifugiert und/oder mit einer Filterpresse, Nutsche oder Vakuumflitration behandelt wird.

8. Verfahren nach einem der vorhergehenden Ansprüche,
**dadurch gekennzeichnet, dass**
das Kollagen umfassende Material mehrfach zerkleinert wird, wobei bevorzugt während des Zerkleinerns ein Oxidationsmittel, bevorzugt Wasserstoffperoxid und ggf. Wasser hinzugegeben wird.

9. Verfahren nach einem der vorhergehenden Ansprüche,
**dadurch gekennzeichnet, dass**
das Verfahren kontinuierlich oder diskontinuierlich durchgeführt wird.

10. Verfahren nach dem vorhergehenden Anspruch,
**dadurch gekennzeichnet, dass**
die Zugabe des Oxidationsmittels, der Säure und/oder der Base während des kontinuierlichen oder während eines Batch-Verfahrens erfolgt.

11. Verfahren nach einem der vorhergehenden Ansprüche,
**dadurch gekennzeichnet, dass**
die Zugabe der Säure so lange erfolgt, bis der isoelektrische Punkt des Kollagens erreicht ist.

12. Verfahren nach einem der vorhergehenden Ansprüche,
**dadurch gekennzeichnet, dass**
es folgende Schritte umfasst:
a) Bereitstellung von Rinderspalt,
b) Zerkleinern des Rinderspalts, so dass handtellergroße Stücke erhalten werden,
c) weiteres Zerkleinern, so dass Stücke erhalten werden mit einer Längen- und/oder Breitendimensionierung von 0,5 bis 1,5 cm,
d) weiteres Zerkleinern mithilfe einer Kolloidmühle, so dass Stücke mit einer Längen- und/oder Breitenausdehnung von < 5 mm, bevorzugt < 3 mm, besonders bevorzugt < 2 mm erhalten werden, wobei in die Kolloidmühle ein Gemisch aus Wasserstoffperoxid und Wasser eingebracht wird,
e) Überführung der so gewonnenen Suspension in mindestens einen Tank, in welchen so lange Essigsäure eingefügt wird, bis der isoelektrische Punkt des Kollagens, bevorzugt bei einem pH-Wert von 4 bis 5,7 eingestellt ist,
f) Überführen der Suspension aus dem mindestens einen Tank in einen Dekanter,
g) Überführen der Festphase aus dem Dekanter in eine weitere Kolloidmühle, so dass Partikel mit einer Längen- und/oder Breitendimensionierung von 1 bis 2 mm erhalten werden, bevorzugt bei gleichzeitiger Dosierung von Wasser,
h) Überführen des so zerkleinerten Materials in einen Puffertank, in dem bevorzugt erneut der pH-Wert eingestellt wird.

13. Verfahren nach dem vorhergehenden Anspruch,
**dadurch gekennzeichnet, dass**
die Suspension aus dem Puffertank in einen weiteren Dekanter überführt wird,
von dem aus die Festphase in eine Vorwärmeinheit und anschließend auf den Walzentrockner aufgebracht wird
und/oder
der Walzentrockner mit einem lonengebläse kombiniert ist, wobei das lonengebläse so ausgerichtet ist, dass es das getrocknete Material auf dem Walzentrockner bebläst und das so gewonnen Material anschließend einer Vermahlung zugeführt wird.

14. Verfahren nach einem der vorhergehenden Ansprüche,
**dadurch gekennzeichnet, dass**
während des Verfahrens Metalldetektoren eingesetzt werden, bevorzugt vor und/oder nach einer ersten Zerkleinerung des Materials und/oder vor der Walzentrocknung
und/oder
das aus der Kolloidmühle gewonnen Material in zwei Tanks überführt wird, in denen eine pH-Wert Einstellung erfolgt
und/oder
die aus dem Dekanter gewonnene Flüssigkeit dem Verfahren wieder zugeführt wird, bevorzugt der Kolloidmühle.

15. Kollagen, hergestellt nach einem Verfahren gemäß der Ansprüche 1 bis 19.
